**Europäisches Patentamt**

**European Patent Office**

**Office européen des brevets**

(19)

(11) Veröffentlichungsnummer : **0 349 700 B1**

## (12) EUROPÄISCHE PATENTSCHRIFT

(45) Veröffentlichungstag der Patentschrift :
**06.05.92 Patentblatt 92/19**

(51) Int. Cl.$^5$ : **A44C 5/14, C14B 19/00**

(21) Anmeldenummer : **88890277.2**

(22) Anmeldetag : **07.11.88**

(54) **Schablone zum Erzeugen von Ausschnitten in Riemen.**

(30) Priorität : **04.07.88 DE 8808558 U**

(43) Veröffentlichungstag der Anmeldung :
**10.01.90 Patentblatt 90/02**

(45) Bekanntmachung des Hinweises auf die
Patenterteilung :
**06.05.92 Patentblatt 92/19**

(84) Benannte Vertragsstaaten :
**AT BE CH DE ES FR GB LI LU NL**

(56) Entgegenhaltungen :
**CH-A- 653 316**
**US-A- 2 619 270**

(73) Patentinhaber : **Hermann Hirsch Leder- und
Kunststoffwarenfabrik
Hirschstrasse 5
A-9021 Klagenfurt (AT)**

(72) Erfinder : **Hirsch, Hermann
Hirschstrasse 5
A-9021 Klagenfurt (Kärnten) (AT)**

(74) Vertreter : **Rau, Manfred, Dr. Dipl.-Ing. et al
Rau & Schneck, Patentanwälte Königstrasse 2
W-8500 Nürnberg 1 (DE)**

EP 0 349 700 B1

## Beschreibung

Die Erfindung betrifft eine Schablone zum Erzeugen von einem oder mehreren Ausschnitten in Riemen und am einer Uhr zu befestigenden, insbesondere in zu Schlaufen gebogenen Enden von Uhrbändern.

Es ist bekannt, Uhrbänder an ihrem am Gehäuse einer Uhr zu befestigenden Ende zu einer Schlaufe umzubiegen, in der ein mit den Uhranstößen zu verbindender Steg, z.B. ein Federstift, aufgenommen ist. Derartige Uhrbänder sind aus der AT-PS 252 634 bekannt. Es ist auch bekannt, an Uhrbändern Ösen auszubilden, z.B. in einem Kunststoffteil des Uhrbandes, über welche die Uhrbänder mit dem Gehäuse einer Uhr verbunden werden können (vgl. EP-A-97 638 und 199 708).

Es sind auch Uhrgehäuse bekannt, an welchen Vorsprünge vorgesehen sind, die in Schlitze in den am Uhrgehäuse zu befestigenden Ende von Uhrbändern eingreifen. Diese Uhrgehäuse besitzen für gewöhnlich auch seitlich am Ende des Uhrbandes anliegende Anstöße. Derartige scharniergelenkartige Verbindungen zwischen Uhrband und Uhrgehäuse sind beispielsweise bei den als "swatch-Uhren" bekannten Uhren vorgesehen.

Der Erfindung liegt die Aufgabe zugrunde, ein Schablone der eingangs genannten Gattung anzugeben, mit der im an der Uhr zu befestigenden Ende des Uhrbandes die für die scharniergelenkartige Verbindung zwischen dem Riemen (Uhrband) und einem Bauteil (Uhrgehäuse) notwendigen Einschnitte erzeugt werden können.

Gemäß der Erfindung wird diese Aufgabe durch die in dem unabhängigen Anspruch 1 angegebenen Merkmale gelöst,

Mit der erfindungsgemäßen Schablone ist es beispielsweise einem Uhrenhändler möglich, unmittelbar vor der Befestigung eines Uhrbandes an einer Uhr, z.B. beim Ersatz von Uhrbändern, die für die Verbindung notwendigen Einschnitte rasch, genau und einfach zu erzeugen, ganz gleich, ob es sich um ein Uhrband mit einer fertigen Öse oder um eines mit einem zu einer Schlaufe zu biegenden Ende ("Klebe-Uhrband") handelt. Es können daher bei Verwendung der erfindungsgemäßen Schablone beliebige Uhrbänder aus Leder oder aus Kombinationen von Leder und Kunststoff oder reine Kunststoffbänder, die alle gegebenenfalls aus mehreren Lagen bestehen, an Uhren über eine scharniergelenkartig ausgebildete Verbindung befestigt werden.

Weitere Einzelheiten und Merkmale der Erfindung ergeben sich aus den Unteransprüchen und er nachstehenden Beschreibung der in den angeschlossenen Zeichnungen teils schematisch wiedergegebenen Ausführungsbeispiele.

Es zeigt

Fig. 1 eine Schablone in Draufsicht,

Fig. 2 teilweise im Schnitt die Schablone aus Fig. 1 in Seitenansicht,

die Fig. 3, 4 und 5 Einzelheiten der Schablone aus Fig. 1 in vergrößertem Maßstab,

Fig. 6 die Arbeitsvorgänge bei Verwendung der erfindungsgemäßen Schablone von Fig. 1,

Fig. 7 eine andere Ausführungsform einer erfindungsgemäßen Schablone,

Fig. 8 eine dritte Ausführungsform einer erfindungsgemäßen Schablone,

Fig. 9 einen Schnitt längs der Linie IX-IX in Fig. 8,

Fig. 10 einen Bestandteil der Schablone von Fig. 8.

Fig. 11 einen weiteren Bestandteil der Schablone von Fig. 8.

Fig. 12 eine vierte Ausführungsform einer erfindungsgemäßen Schablone und

Fig. 13 einen Schnitt entlang der Linie XIII-XIII in Fig. 12.

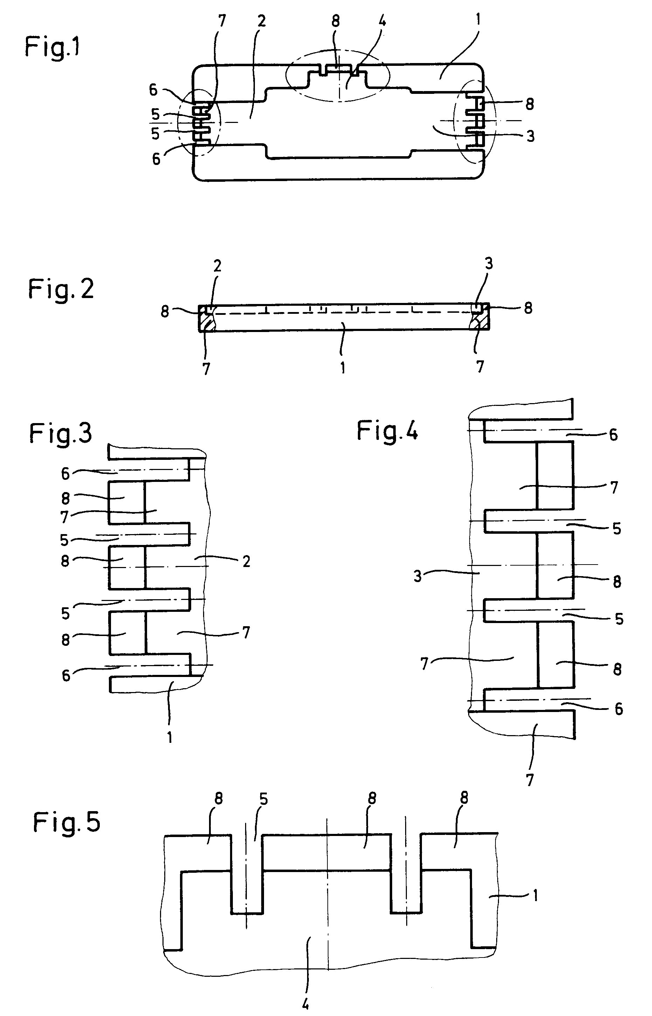

Die in Fig. 1 gezeigte Schablone 1 ist eine im wesentlichen rechteckige Platte aus Metall oder Kunststoff, die drei Vertiefungen 2, 3 und 4 für die Aufnahme des mit Ausschnitten zu versehenden Endes eines Uhrbandes oder eines sonstigen Riemens aufweist. Im Bereich der Vertiefung 2 sind zwei Schlitze 5 und am Rand der Vertiefung 2 zwei weitere Schlitze 6 vorgesehen. Die zwischen den Schlitzen 5 und 6 angeordneten Stege 7 besitzen an ihren freien Enden nach oben weisende Anschläge 8 für das stirnseitige Ende des mit Ausschnitten zu versehenden Uhrbandes.

Auch im Bereich der beiden anderen Vertiefungen 3 und 4 sind Schlitze 5 und 6 (Vertiefung 3) bzw. nur Schlitze 5 (Vertiefung 4) vorgesehen.

Aus Fig. 1 und den Fig. 3 und 4 ist ersichtlich, daß die Schlitze 6 im Bereich der Längsseitenränder des mit Ausschnitten zu versehenden Uhrbandes ausgerichtet sind, so daß beim Stanzvorgang im Bereich der Schlitze 6 die Seitenränder so geschnitten werden, daß zwei im wesentlichen in Längsrichtung des Uhrbandes verlaufende Flächen gebildet werden, die zwischen die beiden äußeren Vorsprünge einer scharniergelenkartigen Anordnung an einem Uhrgehäuse passen.

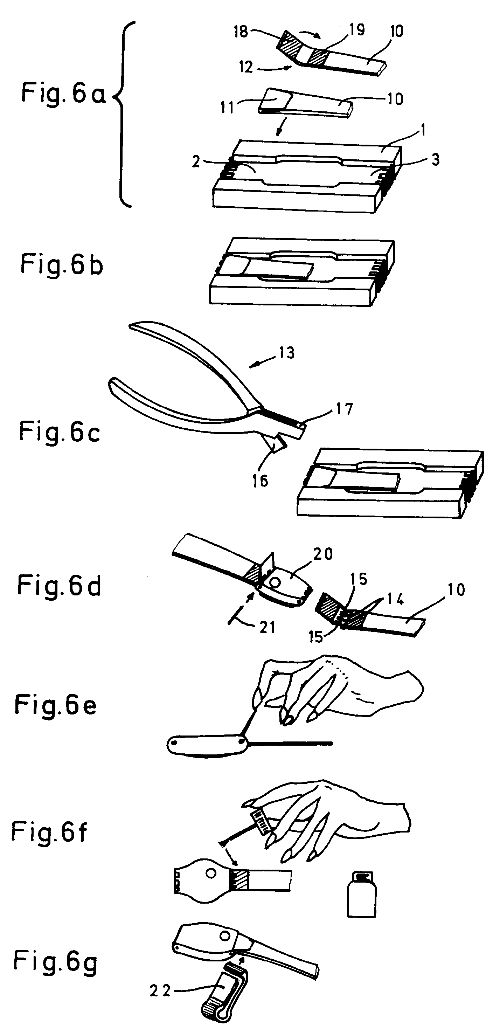

Im folgenden wird unter Bezugnahme auf die Fig. 6a bis 6g die Verwendung der in den Fig. 1 bis 5 gezeigten Schablone 1 zur Befestigung eines Uhrbandes 10, das ein zu einer Schlaufe 11 zu biegendes Ende 12 besitzt, beschrieben (vgl. Fig. 6a). Das Ende 12 des Uhrbandes 10 wird, wie in Fig. 6b gezeigt, bei umgeklapptem Ende in die Vertiefung 2 der Schablone 1 eingelegt. Nun werden mit Hilfe des in Fig. 6c gezeigten Stanzwerkzeuges 13, wie in Fig. 6c angedeutet, im Bereich der Schlitze 5 der Vertiefung 2 bei zur Schlaufe 11 umgeklapptem Ende 12 des Uhrbandes 10 zweinur nach vorne offene Ausschnitte 14 sowie im Bereich der Schlitze 6 der Vertiefung 2 zwei im Bereich der Seitenränder des Uhrbandes 10 angeordnete, nach vorne und zur Seite hin offene Ausschnitte 15 erzeugt. Hiezu wird ein Ansatz 16 (Stanzstempel) des Stanzwerkzeuges 13 nacheinander in die Schlitze 5 und 6 eingeführt und die Zange 13 geschlossen, wobei ihr Niederhalten 17 von oben gegen das zur Schlaufe 11 gebogene Ende 12 des Uhrbandes 10 anliegt. Das so mit Ausschnitten 14 und 15 versehene Ende 12 des Uhrbandes 10 ist in Fig. 6d gezeigt. Dieses wird nun an das Uhrgehäuse 20 so angesetzt (Fig. 6d), daß die zwischen den Einschnitten 14 und 15 des Uhrbandes 10 verbleibenden Stege in die Ausnehmungen zwischen den Vorsprüngen am Uhrgehäuse 20 eingreifen. Hierauf wird ein Stift 21 in die Bohrungen in den Ansätzen des Uhrgehäuses 20 eingeschoben und, wie in Fig. 6e gezeigt, durch leichten Zug am umzubiegenden Ende 12 des Uhrbandes 10 die Schlaufe straff ausgebildet und die Ausschnitte 14 und 15 gegenüber dem Uhrgehäuse 20 richtig positioniert.

Als letzter Vorgang wird, wie in den Fig. 6f und 6g gezeigt, der Klebstoff in den Bereichen 18 und 19 des Uhrbandes 10 (Fig. 6a) aktiviert, dei Schlaufe 11 geschlossen und mit Hilfe einer Klemme 22 bis zur Fertigstellung der Klebeverbindung fixiert.

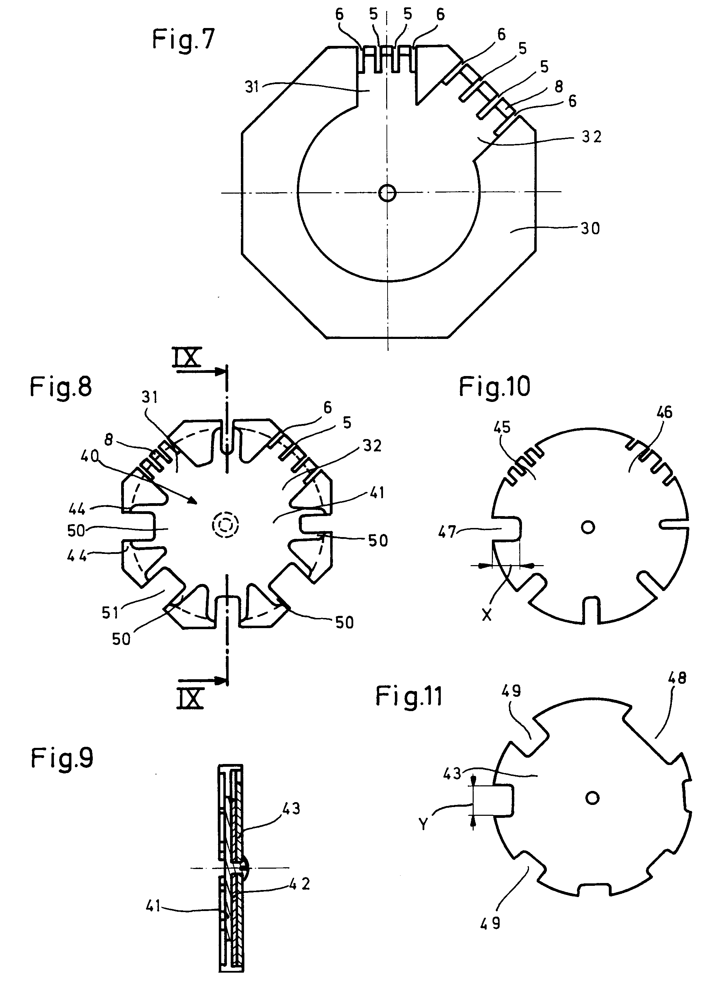

Die in Fig. 7 gezeigte Schablone 30 ist achteckig ausgebildet und besitzt zwei Vertiefungen 31, 32 unterschiedlicher Breite, wobei auch die Schlitze 5 und 6 im Bereich dieser Ausnehmungen 31, 32 unterschiedlich angeordnet sind. Die Verwendung der Schablone 30 entspricht der Verwendung der Schablone 1, wie sie an Hand der Fig. 6a bis 6g erläutert worden ist.

Die in den Fig. 8 bis 10 gezeigte Schablone 40 ist ebenfalls achteckig ausgebildet und besteht aus drei Scheiben 41, 42 und 43. In der Scheibe 41 der Schablone 40 sind zunächst Vertiefungen 31 und 32, die ähnlich wie die Vertiefungen 31, 32 der Schablone 30 ausgebildet sind, vorgesehen.

In der Scheibe 41 der Schablone 40 sind sechs weitere Vertiefungen 50 vorgesehen, die verschieden breit ausgebildet sein können und von einer mittig in der Scheibe 41 vorgesehenen Vertiefung ausgehen. Im Bereich jeder Vertiefung 50 sind in der Scheibe 41 Aussparungen 51 vorgesehen. Am randseitigen Ende jeder Vertiefung 50 sind Anschläge 44 für die radiale Ausrichtung des mit Ausschnitten zu versehenden Endes 12 des Uhrbandes 10 vorgesehen. Die Aussparungen 51 können unterschiedliche Breiten besitzen, wie dies in Fig. 8 angedeutet ist.

Die Scheibe 42 ist mit der Scheibe 41 drehbar verbunden und besitzt in den Bereichen 45 und 46 Schlitze, die den Schlitzen 5 und 6 der Vertiefungen 31 und 32 entsprechen. Weiters sind in der Scheibe 42 Ausnehmungen 47 vorgesehen, die alle die gleiche radiale Abmessung x aufweisen, jedoch unterschiedlich breit sind.

In der dritten Scheibe 43 der Schablone 40 sind Ausnehmungen 49 vorgesehen, die alle die gleiche Breite y, jedoch unterschiedliche große radiale Abmessungen aufweisen. Weiters besitzt die Scheibe 43 eine Ausnehmung 48, die durch Verdrehen der Scheibe 43 gegenüber der Scheibe 41 in den BEreich der Vertiefungen 31 und 32 bzw. der dort vorgesehenen Schlitze 5 und 6 gebracht wird, wenn unter Verwendung der Vertiefungen 31 bzw. 32 Ausschnitte in Uhrbändern erzeugt werden sollen.

Die drei Scheiben 41, 42 und 43 der Schablone 40 sind gegeneinander verdrehbar, jedoch mit Rastmitteln z.B. in nicht gezeigte Vertiefungen in den Scheiben eingreifenden Vorsprüngen versehen, welche die Scheiben sichern, wenn sich die drei Scheiben 41, 42, 43 der Schablone 40 beispielsweise in der in Fig. 8 gezeigten Drehlage befinden. Auf diese Weise werden die Scheiben gegeneinander gegen Verdrehung gesichert, wenn irgendeine der Ausnehmungen 47 gegenüber irgendeiner der Ausnehmungen 49 und diese beide gegenüber irgendeiner der Aussparungen 51 der Scheibe 41 ausgerichtet sind.

Die Verwendung der Schablone 40 entspricht bezüglich ihrer Vertiefungen 31 und 32 der Schablone 30 bzw. 1.

Die Aussparungen 51 und die Ausnehmungen 47 und 49 dienen jedoch dazu, in den Enden 12 von Uhrbändern 10 verschieden breite und/oder verschieden tiefe Ausschnitte zu erzeugen. Hiezu kann das in Fig. 6c gezeigte Stanzwerkzeug 13 verwendet werden, indem dieses mehrfach betätigt wird, wobei der Bereich, in dem das Stanzwerkzeug angesetzt werden kann, sowohl in der Breite (quer zum Band) als auch in der Tiefe (in Bandrichtung) durch die Kombination einer der Aussparungen 51 mit je einer der Ausnehmungen 47 und 49 definiert wird.

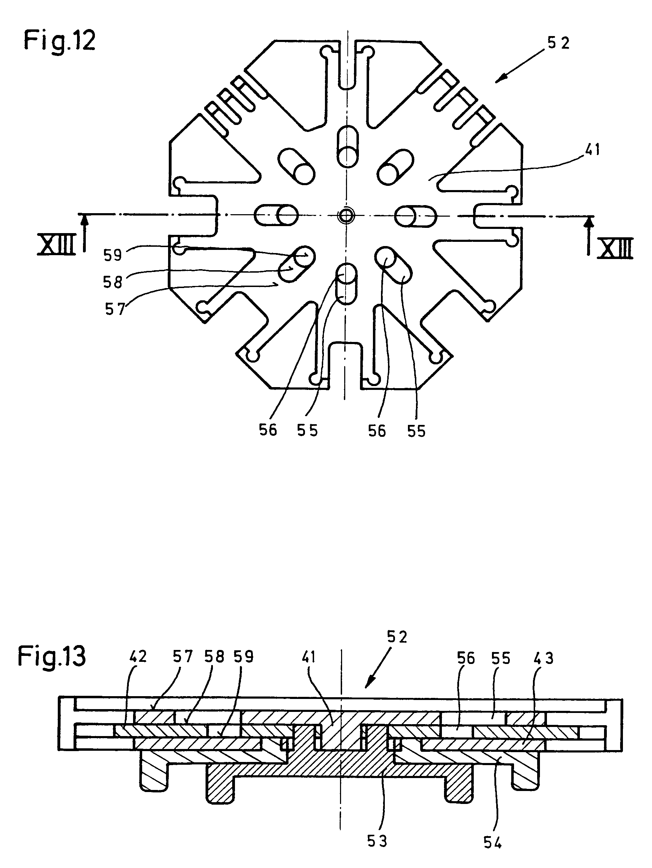

Die in den Fig. 12 und 13 gezeigte Schablone 52 ist eine geänderte Ausführungsform der in den Fig. 8 bis 11 dargestellten Schablone 40. Die Schablone 52 besteht ebenfalls aus Scheiben 41, 42 und 43. Zur besseren Handhabung der Schablone 52 ist ein Drehgriffteil 53, der durch die Scheibe 43 ragt, mit der Scheibe 42 verbunden, z.B. in diese eingepreßt. Mit der Scheibe 43 ist ein Drehgriffteil 54 in ähnlicher Weise wie der Drehgriffteil 53 mit der Scheibe 42 verbunden.

Die Scheibe 43 ist über den Drehgriffteil 54 am Drehgriffteil 53 und dieser über die Scheibe 42 an der Scheibe 41 drehbar gelagert.

In der Scheibe 41 sind Schlitze 55 und in der Scheibe 42 Löcher 56 vorgesehen, welche in jeder Gebrauchsstellung der Schablone 52 übereinanderliegen. Die Anzahl der Schlitze 55 und der Löcher 56 entspricht jeweils der Anzahl der Vertiefungen 31, 32 und 50.

Auf der Scheibe 41 sind im Bereich der Schlitze 55 auf der Fläche 57 Codierungen angebracht, die den Vertiefungen 31, 32 bzw. 50 entsprechen. Ebenso sind auf den Flächen 58 der Scheibe 42, die durch die Schlitze 55 sichtbar sind, Codierungen, die den Ausnehmungen in der Scheibe 42 entsprechen, und auf den Flächen 59 auf der Scheibe 43, die durch die Schlitze 55 und die Löcher 56 sichtbar sind, Codierungen, die den Ausnehmungen in der Scheibe 43 entsprechen, angebracht.

Durch Zusammenstellen der einzelnen Codierungen auf den Scheiben 41, 42 und 43 kann in einfacher Weise eine Kombination bestimmter Ausnehmungen in den Scheiben 41, 42 und 43 eingestellt werden.

## Patentansprüche

1. Schablone (1, 30, 40) zum Erzeugen von einem oder mehreren Ausschnitten (14, 15) in Riemen und an einer Uhr (20) zu befestigenden, insbesondere in zu Schlaufen (11) gebogenen Enden (12) von Uhrbändern (10), wobei die Schablone (1, 30, 40) wenigstens eine Vertiefung (2, 3, 4, 31, 32, 50) zur Aufnahme des mit Ausschnitten (14, 15) zu versehenden Endes (12) des Uhrbandes (10) aufweist, und daß in der Schablone (1, 30, 40) im Bereich der Vertiefung (2, 3, 4, 31, 32, 50) wenigstens ein Schlitz (5, 6, 43) für den Ansatz (16) eines Stanzwerkzeuges (13), das beispielsweise die Form einer Zange besitzt, vorgesehen ist.

2. Schablone nach Anspruch 1, dadurch gekennzeichnet, daß mehrer nebeneinanderliegende Schlitze (5, 6) vorgesehen sind.

3. Schablone nach Anspruch 1 oder 2, dadurch gekennzeichnet, daß im Bereich der Seitenränder des Uhrbandes (10) Schlitze (6) vorgesehen sind, die im Bereich der Seitenränder des Uhrbandes (10) angeordnet sind.

4. Schablone nach einem der Ansprüche 1 bis 3, dadurch gekennzeichnet, daß die Vertiefung (2, 3, 4, 31, 32, 50) in der Schablone (1, 30, 40) neben den Schlitzen (5, 6, 43) nach oben weisende Anschläge (8, 44) für das stirnseitige Ende des Uhrbandes (10) aufweist.

5. Schablone nach einem der Ansprüche 1 bis 4, dadurch gekennzeichnet, daß die Schablone (1, 30) als im wesentlichen ebene Platte ausgebildet ist, in der an wenigstens zwei Seiten Vertiefungen (2, 3, 4, 31, 32) zur Aufnahme unterschiedlich breiter Uhrbänder (10) vorgesehen sind.

6. Schablone nach einem der Ansprüche 1 bis 5, dadurch gekennzeichnet, daß an der Schablone (1, 30, 40) mehrere Vertiefungen (2, 3, 4, 31, 32) zur Aufnahmen von Uhrbändern (10) mit unterschiedlich angeordneten Schlitzen (5, 6, 43) vorgesehen sind.

7. Schablone nach einem der Ansprüche 1 bis 6, dadurch gekennzeichnet, daß die Schablone (40) eine polygonale Scheibe (41) aufweist, die mit einer oder mehreren, vorzugsweise verschieden breiten Vertiefungen (31, 32, 50) zur Aufnahme des Uhrbandes (10) versehen ist, daß mit der Scheibe (41) eine zweite Scheibe (42) verbunden ist, die gegenüber der die Vertiefungen (31, 32, 50) aufweisenden Scheibe (41) verdrehbar ist, und daß in der zweiten Scheibe die Schlitze (45, 46, 47) für den Ansatz (16) des Stanzwerkzeuges (13) vorgesehen sind.

8. Schablone nach Anspruch 7, dadurch gekennzeichnet, daß in der ersten Scheibe (41) über ihren Umfang verteilt Vertiefungen (50) für Uhrbänder (10) unterschiedlicher Breite vorgesehen sind, und daß im Bereich eines Teils Vertiefungen (50) zum Rand der Scheibe (41) hin offene Schlitze (5, 6 oder Aussparungen (43) vorgesehen sind.

9. Schablone nach Anspruch 7 oder 8, dadurch gekennzeichnet, daß an der zweiten Scheibe (42) Gruppen (45, 46) unterschiedlich angeordneter Schlitze und Ausschnitte (47) für die Herstellung breiterer Ausschnitte an den Enden der Uhrbänder (10) vorgesehen sind.

10. Schablone nach Anspruch 9, dadurch gekennzeichnet, daß die Ausschnitte (47) unterschiedliche Breite, jedoch die gleiche radiale Abmessung (x) aufweisen.

11. Schablone nach einem der Ansprüche 7 bis 10, dadurch gekennzeichnet, daß mit der ersten (41) und der zweiten Scheibe (42), gegenüber diesen verdrehbar eine dritte Scheibe (43) verbunden ist, und daß in der dritten Scheibe (43) Ausnehmungen (48, 49) mit verschieden großen radialen Abmessungen vorgesehen sind.

12. Schablone nach einem der Ansprüche 7 bis 11, dadurch gekennzeichnet, daß die Scheiben (41, 42, 43) mit Rastmitteln versehen sind, welche die Scheiben (41, 42, 43) in Stellungen lösbar festhalten, in welchen die Vertiefungen (31, 32, 50) in der einen Scheibe (41) gegenüber den Schlitzen (45, 46) bzw. den Ausnehmungen (47) in der zweiten Scheibe (42) und gegebenenfalls gegenüber den Ausnehmungen (48, 49) in der dritten Scheibe (43) ausgerichtet sind.

## Claims

1. A template (1, 30, 40) for the production of one or more cutouts (14, 15) in belts and in ends (12) of watch straps (10), in particular bent to loops (11) which are to be attached to a watch (2), in which the template (1, 30, 40) has at least one depression (2, 3, 4, 31, 32, 50) to receive the end (12) of the watch strap (10) which is to be provided with cutouts (14, 15), and in which in the template (1, 30, 40) in the region of the depression (2, 3, 4, 31, 32, 50) at least one slit (5, 6, 43) is provided for the projection (16) of a punching tool (13), which is in the form, for example, of pliers.

2. A template according to claim 1, characterised in that a plurality of slits (5, 6) is provided, lying adjacent to each other.

3. A template according to claim 1 or 2, characterised in that in the region of the lateral edges of the watch strap (10), slits (6) are provided, which are arranged in the region of the lateral edges of the watch strap (10).

4. A template according to one of claims 1 to 3, characterised in that the depression (2, 3, 4, 31, 32, 50) in the template (1, 30, 40) adjacent the slits (5, 6, 43) has upwardly pointing stops (8, 44) for the front end of the watch strap (10).

5. A template according to one of claims 1 to 4, characterised in that the template (1, 30) is constructed as a substantially flat plate, in which depressions (2, 3, 4, 31, 32) are provided on at least two sides to receive watch straps (10) of differing widths.

6. A template according to one of claims 1 to 5, characterised in that a plurality of depressions (2, 3, 4 31, 32) is provided on the template (1, 30, 40) to receive watch straps (10) with differently arranged slits (5, 6, 43).

7. A template according to one of claims 1 to 6, characterised in that the template (40) comprises a polygonal disc (41), which is provided with one or more depressions (31, 32, 50), preferably of differing widths, to receive the watch strap (10), that a second disc (42) is connected to the disc (41), which second disc (42) is rotatable with respect to the disc (41) having the depressions (31, 32, 50), and that in the second disc the slits (45, 46, 47) are provided for the projection (16) of the punching tool (13).

8. A template according to claim 7, characterised in that in the first disc (41) depressions (50) are provided, distributed over its periphery, for watch straps (1) of differing widths, and that in the region of one part of the depressions (50), slits (5, 6) or recesses (43) are provided, which are open towards the edge of the disc (41).

9. A template according to claim 7 or 8, characterised in that on the second disc (42) groups (45, 46) of differently arranged slits and cutouts (47) are provided for the production of wider cutouts at the ends of the watch straps (10).

10. A template according to claim 9, characterised in that the cutouts (47) have differing widths but the same radial dimension (x).

11. A template according to one of claims 7 to 10, characterised in that a third disc (43) is connected to the first disc (41) and the second disc (42) so as to be rotatable with respect to these, and that in the third disc (43) recesses (48, 49) are provided, having radial dimensions of different sizes.

12. A template according to one of claims 7 to 11, characterised in that the discs (41, 42, 43) are provided with detent means which secure the discs (41, 42, 43) releasably in positions in which the depressions (31, 32, 50) in one disc (41) are aligned with respect to the slits (45, 46) or respectively the recesses (47) in the second disc 42) and if applicable with respect to the recesses (48, 4) in the third disc (43).

## Revendications

1. Gabarit (1, 30, 40) pour la production d'une ou de plusieurs découpes (14, 15) dans des sangles et dans des extrémités (12) de bandes de bracelet de montre (10), en particulier repliées en boucles (11) et à fixer à une montre (20), le gabarit (1, 30, 40) comportant au moins un creux (2, 3, 4, 31, 32, 50) pour la réception de l'extrémité (12) de la bande de bracelet de montre (10) à munir de découpes (14, 15) tandis que dans le gabarit (1, 30, 40) au voisinage du creux (2, 3, 4, 31, 32, 50) est prévue au moins une fente (5, 6, 43) pour l'appendice (16) d'un outil de découpage (13) qui possède par exemple la forme d'une pince.

2. Gabarit selon la revendication 1, caractérisé en ce que sont prévues plusieurs fentes (5, 6) placées les unes à côté des autres.

3. Gabarit selon la revendication 1 ou 2, caractérisé en ce qu'au voisinage des bords latéraux de la bande de bracelet de montre (10) sont prévues des fentes (6) qui sont disposées au voisinage des bords latéraux de la bande de bracelet de montre (10).

4. Gabarit selon l'une des revendications 1 à 3, caractérisé en ce que le creux (2, 3, 4, 31, 32, 50) dans le gabarit (1, 30, 40) comporte, à côté des fentes (5, 6, 43), des butées (8, 44) orientées vers le haut pour l'extrémité, côté frontal, de la bande de bracelet de montre (10).

5. Gabarit selon l'une des revendications 1 à 4, caractérisé en ce que le gabarit (1, 30) est réalisé sous forme d'une plaque sensiblement plane dans laquelle des creux (2, 3, 4, 31, 32) sont prévus sur au moins deux côtés pour la réception de bandes de bracelet de montre (10) de largeurs différentes.

6. Gabarit selon l'une des revendications 1 à 5, caractérisé en ce que sur le gabarit sont prévus plusieurs creux (2, 3, 4, 31, 32) pour la réception de bandes de bracelet de montre (10) à fentes (5, 6, 43) disposées différemment.

7. Gabarit selon l'une des revendications 1 à 6, caractérisé en ce que le gabarit (40) comporte un disque polygonal (41) qui est pourvu d'un ou de plusieurs creux (31, 32, 50) de préférence de largeurs différentes pour la réception de la bande de bracelet de montre (10), en ce que le disque (41) est relié à un second disque (42) qui peut tourner par rapport au disque (41) comportant les creux (31, 32, 50) et en ce que dans le second disque sont prévues les fentes (45, 46, 47) pour l'appendice (16) de l'outil de découpage (13).

8. Gabarit selon la revendication 7, caractérisé en ce que dans le premier disque (41) sont prévus des creux (50) pour bandes de bracelet de montre (10) de largeurs différentes, répartis sur sa périphérie et en ce qu'au voisinage d'une partie des creux (50) sont prévues des fentes (5, 6) ou évidements (43) ouverts en direction du bord du disque (41).

9. Gabarit selon la revendication 7 ou 8, caractérisé en ce que sur le second disque (42) sont prévus des groupes (45, 46) de fentes disposées différemment et des découpes (47) pour la réalisation de découpes plus larges aux extrémités des bandes de bracelet de montre (10).

10. Gabarit selon la revendication 9, caractérisé en ce que les découpes (47) de largeurs différentes présentent cependant la même dimension radiale (x).

11. Gabarit selon l'une des revendications 7 à 10, caractérisé en ce qu'un troisième disque (43) est relié au premier (41) et au second disque (42) de façon à pouvoir tourner vis à vis de ceux-ci et en ce que dans le troisième disque (43) sont prévus des évidements (48, 49) à dimensions radiales de grandeurs différentes.

12. Gabarit selon l'une des revendications 7 à 11, caractérisé en ce que les disques (41, 42, 43) sont pourvus de moyens d'encliquetage qui immobilisent amoviblement les disques (41, 42, 43) dans des positions dans lesquelles les creux (31, 32, 50) dans un disque (41) sont alignés par rapport aux fentes (45, 46) ou aux évidements (47) tans le second disque (42) et éventuellement par rapport aux évidements (48, 49) dans le troisième disque (43).

EP 0 349 700 B1

Fig.1

Fig. 2

Fig.3

Fig.4

Fig.5

Fig.6a

Fig.6b

Fig.6c

Fig.6d

Fig.6e

Fig.6f

Fig.6g

Fig.7

31

6 5 5 6

6

5

5

8

6

32

30

Fig.8

IX

31

6 5

8

40

44

50

44

51

50

50

32

41

50

50

Fig.9

43

42

41

IX

Fig.10

45

46

47

X

Fig.11

49

48

43

Y

49

Fig.12

Fig.13